# EUROPÄISCHE PATENTSCHRIFT

(11) **EP 0 765 366 B1**
(45) Veröffentlichungstag und Bekanntmachung des Hinweises auf die Patenterteilung: **06.10.1999**
(21) Anmeldenummer: 95923291.9
(22) Anmeldetag: 10.06.1995
(51) Int. Cl.: C09D 5/03, C08J 3/12

(54) **VERFAHREN ZUR HERSTELLUNG VON PULVERLACKZUSAMMENSETZUNGEN UND DEREN VERWENDUNG ZUR HERSTELLUNG VON ÜBERZÜGEN**
PROCESS FOR PREPARING COATING POWDER COMPOSITIONS AND THEIR USE FOR MAKING COATINGS
PROCEDE DE PREPARATION DE COMPOSITIONS DE PEINTURES PULVERULENTES ET LEUR UTILISATION POUR REALISER DES REVETEMENTS

(30) Priorität: 14.06.1994 DE 4420640
(43) Veröffentlichungstag der Anmeldung: 02.04.1997
(73) Patentinhaber: Herberts Gesellschaft mit beschränkter Haftung, 42285 Wuppertal (DE); MESSER GRIESHEIM GmbH, 60547 Frankfurt (DE)
(72) Erfinder: SAATWEBER, Dietrich, D-42369 Wuppertal (DE); MAAG, Karin, D-42279 Wuppertal (DE); DIENER, Wolfgang, D-42113 Wuppertal (DE); KLOSTERMANN, Peter, D-42117 Wuppertal (DE); BERGER, Thomas, D-45219 Essen (DE)
(74) Vertreter: Türk, Gille, Hrabal
(86) Internationale Anmeldenummer: EP9502241
(87) Internationale Veröffentlichungsnummer: WO9534606

(56) Entgegenhaltungen:
- WO-A-94/09913
- US-A- 2 347 464
- US-A- 5 290 827

## Beschreibung

Die Erfindung betrifft ein Herstellungsverfahren für pulverförmige Überzugsmittel, das auch direkt bei Herstellung von Überzügen aus pulverförmigen Überzugsmitteln im Rahmen eines Sprühbeschichtungsverfahrens durchgeführt werden kann. Gemäß einer Ausführungsform betrifft die Erfindung auch ein Verfahren zum Recycling von Pulverlackmaterialien.

Eine Vielfalt von Methoden zur Herstellung duroplastischer Pulverlacke ist bis heute bekannt geworden. Das heute übliche mit Abstand in der Praxis breiteste Anwendung findende Verfahren ist die Herstellung von Pulverlacken durch Extrudieren des durch Mischen aller benötigten Komponenten fertig formulierten Pulverlackes in Form einer pastösen Schmelze, Abkühlen der Schmelze, Grobzerkleinerung, Feinmahlung und nachgeschaltetes Sieben auf gewünschte Kornfeinheit (vgl. Ullmanns Enzyklopädie der technischen Chemie, Band 15, Seite 680, 4. Auflage, 1978, Verlag Chemie Weinheim; und H. Kittel, Lehrbuch der Lacke und Beschichtungen, Band 4, Seite 355, 1976, Verlag W.A. Colomb Berlin). Die in dieser Weise hergestellten Pulverlacke besitzen eine Reihe von Nachteilen.

Werden hochreaktive Bindemittelmischungen verarbeitet, verläuft der Extrusionsvorgang oftmals zu langsam, so daß partielle Gelbildung beobachtet wird. Diese Pulver können dann nicht mehr für Beschichtungen eingesetzt werden.

Beim Vermahlen bildet sich üblicherweise ein sehr breites Teilchengrößenspektrum aus, im Bereich von unter 0,1 µm bis üblicherweise hin zu 500 µm. Ein anschließendes Sieben in für den spezifischen Anwendungszweck geeignete Teilchengrößenfraktionen kann notwendig werden.

Das Oberkorn muß dann in einem nachgeschalteten Vermahlungsschritt erneut vermahlen werden. Besonders problematisch in arbeitshygienischer Hinsicht ist der Feinkornanteil mit Teilchengrößen unterhalb 5 µm aufgrund der Lungengängigkeit und außerdem durch erhöhte Gefahr von Staubexplosionen. Weiterhin besitzen Feinkornpulver verarbeitungstechnische Nachteile.

Weiterhin sind zur Herstellung von Pulverlacken und zur Beschichtung mit solchen Pulverlacken geeignete Verfahren bekannt geworden, die unter Versprühung von Pulverlackschmelzen arbeiten.

So beschreibt die DE-A-22 33 138 die Herstellung von duroplastischen und thermoplastischen Pulverlacken durch Versprühung geschmolzener Bindemittel bzw. Bindemittelmischungen. Basisharz und Härter werden in einem beheizten Mischbehälter gemeinsam aufgeschmolzen und gemischt. Dabei werden im Fall der Herstellung duroplastischer Pulverlacke nur Härter verarbeitet, die im verfahrenstypischen Temperaturbereich ihre vernetzende Wirkung noch nicht entfalten. Das Verfahren ist speziell für hochreaktive Pulverlacke nicht geeignet.

Aus der WO-92 00 342 ist ein Verfahren zur Herstellung von Pulverlacken bekannt, bei dem eine geschmolzene Mischung aus einem filmbildenden Bindemittel und einem Härter für dieses Bindemittel atomisiert, d.h. versprüht wird. Die dabei gebildeten Tröpfchen werden in so kurzer Zeit unter ihren Erweichungspunkt abgekühlt, daß keine signifikante Vernetzung innerhalb der Teilchen stattfindet. Es bilden sich feste Lackteilchen mit sphärischer Gestalt und enger Teilchengrößenverteilung. Die Teilchen werden nach dem Abkühlen mit geeigneten Maßnahmen aus dem Trägergasstrom abgetrennt. Sie unterscheiden sich in ihrer chemischen Zusammensetzung nicht von üblichen durch Extrudieren und Vermahlen einer Harz-/Härter-Schmelze hergestellten Pulverlacken und können mit pulverlacktypischen Applikationsmethoden aufgebracht werden.

Die in DE-A-22 33 138 und WO-92 00 342 beschriebenen Verfahren haben den gemeinsamen Nachteil, daß Basisharz- und Härterkomponente des duroplastischen Pulverlacks vor dem Versprühen geschmolzen und als Schmelze gemischt werden müssen. Zum Schmelzen müssen relativ hohe Temperaturen aufgewendet werden, was zu einer thermischen Belastung der Pulverlackzusammensetzung führt. Dies ist insbesondere im Falle hochreaktiver Pulverlacke problematisch, da um ein Gelieren oder Angelieren zu verhindern, ein großer Aufwand betrieben werden muß, der dazu dient, die Kontaktzeit von Basisharz und Härter im geschmolzenen Zustand zu minimieren.

Beim Beschichtungsprozeß unter Verwendung von Pulverlacken kommt es zu einem unvermeidbaren Anfall von Pulverlack-Overspray, der vorzugsweise einem Recyclingverfahren zugeführt werden sollte.

Übliche Verfahren zur Wiederverwendung von Pulverlack-Overspray arbeiten so, daß der Pulverlack-Overspray mit frischem Pulverlack gemischt und dieses Gemisch anschließend zur Lackierung verwendet wird. Dies ist insbesondere problematisch bei der Herstellung von Lackierungen, an die höchste Anforderungen bezüglich der optischen Qualität gestellt werden, wie beispielsweise in der Kraftfahrzeuglackierung.

Die DE-A-40 28 567 beschreibt ein Recyclingverfahren für Pulverlack-Overspray bzw. den Rückstand aus der Pulver-Klassifizierung, indem das zu recyclisierende Material vor der Extrusion oder im Laufe des Extrusionsprozesses in den Pulverlackproduktionsprozeß rückgeführt wird. Nachteilig daran ist, daß das recyclisierte Material bei der erneuten Extrusion einer erneuten thermischen Belastung unterworfen wird, was insbesondere bei hochreaktiven Pulverlackmaterialien zu einem unerwünschten Anvernetzen und partieller Gelbildung führen kann.

Aus der JP-Offenlegungsschrift 53-5239 ist es darüber hinaus bekannt, Pulverlack-Overspray in organischen Lösemitteln gelöst als lösemittelhaltiges Lacksystem oder nach dem Suspendieren in Wasser als wäßrige Slurry zu verwenden, d.h. die Wiederverwendung erfolgt nicht als Pulverlack.

Aufgabe der Erfindung ist es, ein Verfahren bereitzustellen, das es gestattet, duroplastische Pulverlacke, die mindestens eine Basisharz- und mindestens eine Härterkomponente enthalten, und thermoplastische Pulverlacke in einfacher Weise herzustellen unter Vermeidung einer zu starken thermischen Belastung. Außerdem sollen Mahlungs- und Siebungsschritte weitgehend vermieden werden. Bevorzugt werden duroplastische Pulverlacke hergestellt.

Eine weitere Aufgabe der Erfindung ist es, ein vereinfachtes Verfahren zum Recycling von Pulverlackmaterialien bereitzustellen, welches insbesondere eine thermische Belastung des zu recyclisierenden Pulverlackmaterials vermeidet. Weiterhin soll das zu findende Verfahren erlauben, gegebenenfalls im zu recyclisierenden Pulverlackmaterial vorhandene mechanische Verunreinigungen aus diesem zu entfernen.

Weiterhin soll das erfindungsgemäße Verfahren es erlauben, wäßrige Suspensionen von Pulverlacken auf einfache Weise herzustellen.

Es hat sich gezeigt, daß die Aufgabe durch das einen Gegenstand der Erfindung bildende Verfahren zur Herstellung von Basisharz- und Härterkomponenten oder thermoplastische Harze enthaltenden Pulverlackzusammensetzungen oder zur Herstellung von wäßrigen Suspensionen solcher Pulverlacke gelöst werden kann. Das Verfahren ist dadurch gekennzeichnet, daß man ein oder mehrere Basisharze und einen oder mehrere Härter oder ein oder mehrere thermoplastische Harze, die jeweils in fester Form vorliegen, gemeinsam in mindestens einer unter Normalbedingungen für Druck und Temperatur gasförmig vorliegenden, niedermolekularen, gegenüber den Basisharzen und Härtern oder thermoplastischen Harzen inerten Verbindung bei einem Druck und einer Temperatur, die geeignet sind, die niedermolekulare Verbindung mindestens in den flüssigen Zustand zu überführen, auflöst und anschließend die erhaltene Lösung entspannt.

Der angewandte Druck und die angewandte Temperatur werden im folgenden auch als Verfahrensdruck bzw. Verfahrenstemperatur bezeichnet. Diese können so gewählt werden, daß kritischer Druck und kritische Temperatur der inerten Verbindung überschritten werden.

Aus der Patentschrift US-A-5 211 342 ist ein Verfahren bekannt, bei dem zur Bildung einer Beschichtung auf einem Substrat geeignete polymere Verbindungen in einem hyperkritischen Fluid gelöst werden und die Lösung in einem Sprühverfahren auf ein Substrat unter Ausbildung einer flüssigen Beschichtung aufgebracht wird. Bei den eingesetzten polymeren Verbindungen handelt es sich um übliche Lackbindemittel, die bei gewöhnlicher Temperatur flüssig sind, und nicht um bei Raumtemperatur feste Bindemittel und Härter bzw. Pulverlacke. Weder die Herstellung von Pulverlacken noch deren Applikation noch das Recycling von Pulverlacken werden in dem genannten Patent angesprochen.

Aus dem Patent US-A-4 582 731 ist ein Verfahren zur Herstellung sehr feiner Pulver durch Entspannung einer Lösung eines Feststoffs in einem überkritischen Fluid bekannt. Die Pulver können als Katalysatoren verwendet werden. Die in diesem Patent beschriebene Herstellung der extrem feinteiligen Pulver wird als Alternative zur Plasmaverarbeitung angesehen. Soweit eine Beschichtung von Oberflächen angesprochen ist, soll ein "molekularer Spray" von individuellen Molekülen oder Atomen als ein Film auf einem Substrat niedergeschlagen werden. Eine Anregung in Hinblick auf die Herstellung oder Applikation von Pulverlacken wird in diesem Patent nicht gegeben.

Das erfindungsgemäße Verfahren kann beispielsweise so durchgeführt werden, daß Basisharz- und Härterkomponenten der Pulverlackzusammensetzungen oder thermoplastische Harze in fester Form zusammengegeben werden, diesen eine unter Normalbedingungen gasförmige niedermolekulare, gegenüber Basisharz- und Härterkomponenten bzw. thermoplastischen Harzen inerte Verbindung in einer solchen Menge zugegeben wird und oberhalb oder unterhalb des kritischen Drucks und der kritischen Temperatur der inerten Verbindung liegende Druck- und Temperaturbedingungen eingestellt werden, daß eine Lösung der Pulverlackzusammensetzung in der niedermolekularen Verbindung entsteht und diese unter Druck stehende Lösung anschließend entspannt wird.

Beispielsweise können die die Pulverlackzusammensetzung bildenden Basisharz- und Härterkomponenten in fester Form gegebenenfalls unter Hinzufügen von Additiven in einem Druckbehälter, z.B. einem Autoklaven, zusammengegeben werden. Basisharz- und Härterkomponenten können zuvor als Schmelze gemischt worden sein. Bevorzugt werden sie im erfindungsgemäßen Verfahren jedoch separat in fester Form, beispielsweise als Pulver oder als Granulat, eingesetzt. Dabei besitzen kleinere Teilchen, z.B. von ca. 1 mm Durchmesser, ein besseres Lösungsverhalten als größere Teilchen. Anschließend wird eine unter Normalbedingungen gasförmige niedermolekulare, gegenüber Basisharz- und Härterkomponenten inerte Verbindung in einer solchen Menge zugegeben und es werden Druck- und Temperaturbedingungen eingestellt, die oberhalb oder unterhalb des kritischen Drucks und der kritischen Temperatur der niedermolekularen, gasförmigen Verbindung liegen, so daß eine unter Druck stehende Lösung der Pulverlackzusammensetzung in der niedermolekularen Verbindung entsteht. Im allgemeinen nimmt die Entstehung dieser Lösung nach Einstellung der entsprechenden Druck- und Temperaturbedingungen eine Zeitdauer im Bereich von 1 Minuten bis 3 Stunden in Anspruch, bevorzugt unter 1 Stunde.

Beispielsweise wird bevorzugt in einem Temperaturbereich von -20 bis +100°C, besonders bevorzugt von +20 bis +70°C gearbeitet, während Drücke bevorzugt im Bereich zwischen 0,15 und 50 MPa angewandt werden. Dabei handelt es sich um Temperaturbedingungen, die eine Reaktion von Basisharz- und Härterkomponenten bzw. eine Gelbildung vermeiden.

Das oder die Basisharze und der oder die Härter oder das oder die thermoplastischen Harze können mindestens teilweise in Form von zu recyclisierendem Pulverlackmaterial eingesetzt werden.

Unter zu recyclisierendem Pulverlackmaterial ist neben Pulverlack-Overspray auch das in der Pulverklassifizierung anfallende Ober- und Unterkorn zu verstehen. Bei den nach dem erfindungsgemäßen Verfahren recyclisierbaren Pulverlackmaterialien kann es sich um thermoplastische Pulverlackmaterialien handeln, jedoch sind duroplastische Pulverlackmaterialien im erfindungsgemäßen Verfahren bevorzugt.

Beispielsweise können die zu recyclisierenden Pulverlackmaterialien in einen Druckbehälter, z. B. einen Autoklaven, gegeben werden. Dabei besitzen kleinere Teilchen, z. B. von ca. 1 mm Durchmesser, ein besseres Lösungsverhalten als größere Teilchen. Anschließend wird eine unter Normalbedingungen gasförmige niedermolekulare, gegenüber dem Pulverlackmaterial inerte Verbindung in einer solchen Menge zugegeben und es werden Druck- und Temperaturbedingungen eingestellt, die oberhalb oder unterhalb des kritischen Drucks und der kritischen Temperatur der niedermolekularen, gasförmigen Verbindung liegen, so daß eine unter Druck stehende Lösung des Pulverlackmaterials in der niedermolekularen Verbindung entsteht. Im allgemeinen nimmt die Entstehung dieser Lösung nach Einstellung der entsprechenden Druck- und Temperaturbedingungen eine Zeitdauer im Bereich von 1 Minute bis 3 Stunden in Anspruch, bevorzugt unter 1 Stunde.

Beispielsweise wird bevorzugt in einem Temperaturbereich von -20 bis +100 °C, besonders bevorzugt von +20 bis +70°C gearbeitet, während Drücke bevorzugt im Bereich zwischen 0,15 und 50 MPa angewandt werden. Dabei handelt es sich um Temperaturbedingungen, die keinen schädigenden Einfluß auf die Komponenten des Pulverlackmaterials ausüben. Beispielsweise wird im Falle der nach dem erfindungsgemäßen Verfahren bevorzugt zu recyclisierenden duroplastischen Pulverlacke eine Reaktion der zugrundeliegenden Basisharz- und Härterkomponenten vermieden.

Das zu recyclisierende Pulverlackmaterial kann also als solches oder im Gemisch mit frischem Ausgangsmaterial für die Pulverlackherstellung nach dem erfindungsgemäßen Verfahren verarbeitet werden.

Als Lösungsmittel zur Bildung der Lösungen von Pulverlackzusammensetzungen können unter Normalbedingungen gasförmige, insbesondere bei Temperaturen von 10 bis 150°C und Drücken von 0,15 bis 60 MPa flüssige niedermolekulare Verbindungen und/oder insbesondere bei Temperaturen von 20 bis 150°C und Drücken von 3 bis 60 MPa überkritische Fluide eingesetzt werden.

Bevorzugte Beispiele für unter Normalbedingungen gasförmige niedermolekulare, gegenüber Basisharz- und Härterkomponenten inerte Verbindungen, die geeignet sind mit den Pulverlackzusammensetzungen unter Druck stehende Lösungen auszubilden, sind Kohlendioxid, Distickstoffoxid, Chlortrifluormethan, Monofluormethan, Ethan, Propan, Butan. Beispielsweise kann beim erfindungsgemäßen Verfahren mit Kohlendioxid (kritische Temperatur: 31,3°C, kritischer Druck: 7,4 MPa, kritische Dichte: 0,45 g cm⁻³) als unter Druck verflüssigter niedermolekularer Verbindung oder als überkritischem Fluid gearbeitet werden. Dabei ist es besonders bevorzugt, solche Druck- und Temperaturbedingungen einzustellen, unter denen Kohlendioxid eine Dichte von 0,6 bis 1,0 g cm⁻³ aufweist. Beispielsweise kann mit Kohlendioxid in einem Temperaturbereich zwischen 10 und 30°C und bei Drücken zwischen 4,5 und 7 MPa als verflüssigtem Gas oder in einem Temperaturbereich zwischen 40 und 70°C und bei Drücken zwischen 10 und 30 MPa als überkritischem Fluid gearbeitet werden.

Beim erfindungsgemäßen Verfahren kann die Konzentration der Pulverlackzusammensetzung innerhalb der unter Druck stehenden Lösung beispielsweise 1 bis 80 Gew.-%, bezogen auf den Bindemittelfestkörper aus Basisharz- und Härterkomponenten betragen. Bevorzugt beträgt sie zwischen 5 und 70 Gew.-%.

Bevorzugt ist der die Lösung der Pulverlackzusammensetzung enthaltende Druckbehälter temperierbar und mit einer Rühr- oder Schüttelvorrichtung oder einer sonstigen der Homogenisierung dienenden Vorrichtung, beispielsweise einer Ultraschallquelle oder einer Rotor-StatorEinrichtung ausgestattet, um die Ausbildung der Lösung zu unterstützen. Nach Ausbildung der Lösung wird diese auf Drücke unterhalb des Verfahrensdrucks entspannt, beispielsweise auf Normaldruck.

Das Entspannen der Lösung unter den Verfahrensdruck, z.B. auf Normaldruck kann auf verschiedene Art und Weise erfolgen. Beispielsweise kann die Lösung spontan, d.h. in einer sehr kleinen Zeitspanne, entspannt werden, oder sie wird innerhalb des Druckbehälters zeitabhängig, beispielsweise in einem Zeitraum zwischen wenigen Sekunden und mehreren Stunden, entspannt. Bevorzugt wird die Temperatur dabei kontrolliert, wobei es zweckmäßig sein kann, die Entspannung unter weitgehend isothermen Bedingungen durchzuführen. Falls notwendig kann die Lösung vor der Entspannung durch Filtration von mechanischen Verunreinigungen, die sich nicht in der inerten Verbindung lösen, befreit werden.

Die Filtration kann diskontinuierlich oder bevorzugt kontinuierlich erfolgen. Für den diskontinuierlichen Betrieb eignet sich die Verwendung von dem Fachmann bekannten Extraktionseinsätzen in Autoklaven. Dabei kann über Siebe, Gewebe, Filterfasern oder bevorzugt Sinterplatten aus inertem Material, bevorzugt aus Metall, z.B. Edelstahl filtriert werden. Im kontinuierlichen Betrieb wird bevorzugt über In-line-Patronenfilter filtriert, die dem Fachmann bekannt sind und in der Praxis eingesetzt werden.

Ein spontanes Entspannen der Lösung der Pulverlackzusammensetzung kann beispielsweise erfolgen, indem sie in eine einen Druck unterhalb des Verfahrensdrucks, vorzugsweise Atmosphärendruck aufweisende Umgebung versprüht wird. Dabei sollen die gebildeten Pulverteilchen unter ihre Glasübergangstemperatur abgekühlt werden. Das kann z.B. unter Ausnutzung der Verdampfungsenthalpie des verflüssigten oder überkritischen Lösemittels geschehen. Ebenso ist es möglich, die Umgebungstemperatur unterhalb der Glasübergangstemperatur der Pulverlackzusammensetzung zu wählen. Das unter Normalbedingungen gasförmige Lösemittel, z.B. Kohlendioxid, entweicht spontan und es bilden sich Pulverlackteilchen.

Bei der einen Druck unterhalb des Verfahrensdrucks aufweisenden Umgebung kann es sich um gegebenenfalls Netzmittel enthaltendes Wasser handeln, in das hinein versprüht wird, wobei das Wasser eine Temperatur unterhalb der Glasübergangstemperatur der Pulverlackzusammensetzung aufweist. Man erhält wäßrige Suspensionen von Pulverlacken. Es ist darauf zu achten, daß das Entspannen durch Versprühen unter Wasser nur mit solchen Pulverlackzusammensetzungen durchgeführt wird, die gegenüber Wasser chemisch inert und hydrolysebeständig sind.

Bevorzugt handelt es sich bei der einen Druck unterhalb des Verfahrensdrucks aufweisenden Umgebung um eine gasförmige Umgebung, beispielsweise Luft oder Inertgas.

Das Versprühen geschieht mittels einer mit dem Druckbehälter verbundenen Sprühvorrichtung, z.B. einer Düse oder einer Rotationsglocke. Bevorzugt erfolgt das Versprühen vertikal, d.h. lotrecht von oben nach unten. Die gebildeten Pulverlackteilchen kühlen sich während des Entspannungsvorgangs unter ihre Glasübergangstemperatur ab. Dies kann unterstützt werden durch äußere Kühlung, z.B. indem in einen kalten Behälter, beispielsweise einen Sprühturm mit gekühlter Wandung gesprüht wird, oder ein gekühlter Inertgas- oder Luftstrom kühlt die Partikel zusätzlich ab. Derartiges Inertgas oder Luft ist bevorzugt in pulverlacktypischer Weise aufbereitet, z.B. ölfrei und getrocknet. Die Wandtemperatur der Sprühkammer unterschreitet bevorzugt einen Wert von 25°C, besonders bevorzugt liegt sie unter 20°C, sie soll ein Aggregieren von Pulverteilchen an der Wand vermeiden.

Die Teilchen werden am Ende des Sprühturms in dem Fachmann bekannter Weise abgetrennt, z.B. mittels eines Zyklons. Es ist auch möglich durch nachgeschaltetes Sieben, z.B. über Metallgewebe, in für die jeweilige Anwendung geeignete Korngrößenklassen aufzutrennen.

Durch geeignete Wahl der Verfahrensparameter (z.B. Durchflußrate, Düsendurchmesser, Viskosität bzw. Konzentration der unter Druck stehenden Lösung) kann die Teilchengröße der Pulverlackteilchen beeinflußt werden. Die Teilchen weisen im allgemeinen einen Durchmesser von 5 bis 150 µm auf. Teilchengrößen von 10 bis 100 µm sind bevorzugt, beispielsweise für den Einsatz in der Automobillackierung. Besonders bevorzugt liegt die Teilchengröße unter 60 µm. Ist die Teilchengröße größer als 100 µm, sind häufig Lufteinschlüsse im Lackfilm zu beobachten und der Verlauf des eingebrannten Lackes wird schlechter. Es ist dann schwierig, den Anforderungen der Automobilindustrie entsprechende hochglänzende störungsfreie Überzüge herzustellen.

Teilchen unter 5 µm werden aus arbeitshygienischen Gründen möglichst vermieden. Bevorzugt werden monomodale Korngrößenverteilungen erzeugt, d.h. diese können durch eine Gaußkurve beschrieben werden.

Das erfindungsgemäße Verfahren kann auch unmittelbar vor der Anwendung der erhaltenen Pulverlacke, praktisch in Form eines Pulverbeschichtungsverfahrens durchgeführt werden. Hierbei erfolgt das vorstehend beschriebene Versprühen der unter Druck stehenden Lösung direkt in Richtung auf ein zu beschichtendes Substrat. Auf diese Weise schließt sich unmittelbar an die Herstellung des Pulverlacks eine Beschichtung an. Dabei wird in einer Beschichtungskabine gearbeitet, deren Betriebstemperatur unterhalb der Glasübergangstemperatur der Pulverlackteilchen liegt. Die Beschichtungskabine kann beispielsweise konstant temperiert werden. Die Sprühaggregate können bei dieser Verfahrensweise beweglich angeordnet sein und sich in ihrem Bewegungsablauf während des Versprühens nach der Geometrie des zu beschichtenden Substrats richten. Sie können beispielsweise an einer automatischen Bewegungseinrichtung angeordnet sein. Das Versprühen kann elektrostatisch unterstützt erfolgen.

Im Anschluß an die Zerstäubung kühlen sich die gebildeten Pulverlackteilchen nach dem Entspannen schnell unter ihre Glasübergangstemperatur (gemessen nach DSC) ab, noch vor dem Auftreffen der Lackpartikel auf der Oberfläche des zu beschichtenden Substrats. Diese Zeitdauer liegt im allgemeinen im Bereich von 0,1 bis 1 Sekunde. Die Entfernung zwischen Sprühvorrichtung und zu beschichtendem Substrat muß so bemessen sein, daß vor dem Auftreffen der Partikel auf das Substrat eine sichere Abkühlung unter die Glasübergangstemperatur gewährleistet ist. Im allgemeinen beträgt der Abstand beispielsweise zwischen 20 und 100 cm, bevorzugt zwischen 30 und 70 cm. Die Glasübergangstemperaturen der Pulverlacke liegen bevorzugt im Bereich zwischen 30 und 80°C.

Eine weitere Ausführungsform des erfindungsgemäßen Herstellungsverfahrens für duroplastische Pulverlacke oder thermoplastische Pulverlacke besteht darin, die Entspannung der unter Druck stehenden Lösung der Pulverlackzusammensetzung nicht spontan, sondern zeitabhängig durchzuführen. Die Entspannung kann kontinuierlich oder stufenweise erfolgen. Bei der kontinuierlichen Entspannung können die Entspannungsraten gleich bleiben oder variiert werden. Während der Entspannung verringert sich die Löslichkeit der Pulverlackzusammensetzung im System, d.h. es kommt zu einer Ausfällung von homogen zusammengesetzten Pulverlackmaterial aus der unter Druck stehenden Lösung. Es ist zweckmäßig, den Entspannungsvorgang temperaturkontrolliert, beispielsweise isotherm durchzuführen, d.h. der während des Entspannungsvorgangs auftretenden Abkühlung wird durch entsprechendes Gegenheizen entgegen gewirkt. Bevorzugt liegt die Arbeitstemperatur dabei unterhalb der Glasübergangstemperatur der Pulverlackzusammensetzung.

Nach Erreichen des Normaldrucks kann dem Druckbehälter ein homogener Feststoff mit schaumartiger Struktur oder bestehend aus Einzelpartikeln, die eine Teilchengröße zwischen 5 und 150 µm haben, entnommen werden. Bevorzugt werden monomodale Korngrößenverteilungen erzeugt, d.h. diese können durch eine Gaußkurve beschrieben werden. Parameter, über die im erfindungsgemäßen Verfahren Einfluß auf die Teilchengrößen bzw. deren Verteilung genommen werden kann, sind beispielsweise: Konzentration der Pulverlackzusammensetzung in der unter Druck stehenden Lösung, Temperatur und Temperaturverlauf während der Entspannung, Druck und Entspannungsrate. Den Einfluß dieser Parameter kann der Fachmann leicht anhand von Versuchen ermitteln und diese im erfindungsgemäßen Verfahren gezielt so einstellen, daß ein für den entsprechenden Anwendungszweck geeignetes Teilchengrößenspektrum entsteht. Während des Entspannungsvorgangs wird die Mischung zweckmäßigerweise durchmischt.

Es kann zweckmäßig sein, die im Rahmen der vorliegenden Erfindung durch zeitabhängige Enspannung gebildeten Pulverlackmaterialien unter geringem Energieaufwand einer nachträglichen Zerkleinerung zu unterziehen. Dabei können dem Fachmann bekannte Aggregate eingesetzt werden, wie z.B. Gutbettwalzenmühlen oder es werden die in der Pulverlacktechnologie üblichen Mahlaggregate bei pulverlackuntypisch kurzen Produktverweilzeiten, d.h. hohem Mengendurchsatz pro Zeiteinheit, verwendet. Dabei kann der schaumartig strukturierte oder aus Einzelpartikeln bestehende Feststoff, die gegebenenfalls zusammenhaften können, in Einzelpartikel getrennt werden. Die nach dem erfindungsgemäßen Herstellungs- und/oder Recyclingverfahren durch spontane oder zeitabhängige Entspannung hergestellten Pulverlacke können einer Siebung unterzogen werden. Im allgemeinen ist dies jedoch nicht notwendig.

Die Zerkleinerung kann auch in Gegenwart von gegebenenfalls Netzmittel enthaltendem Wasser erfolgen. Aus der so erhältlichen wäßrigen Suspension kann das Pulverlackmaterial mechanisch abgetrennt und getrocknet werden oder die wäßrige Suspension des Pulverlacks wird direkt zu Beschichtungszwecken eingesetzt.

Nach dem erfindungsgemäßen Verfahren lassen sich alle duroplastischen oder auch alle thermoplastischen Pulverlackzusammensetzungen verarbeiten, die nach Zugabe einer ausreichenden Menge einer unter Normalbedingungen für Druck und Temperatur gasförmig vorliegenden niedermolekularen, gegenüber Basisharz- und Härterkomponenten der Pulverlackzusammensetzung inerten Verbindung oder einer Mischung aus solchen Verbindungen und bei Einstellung eines Drucks und einer Temperatur, die geeignet sind die niedermolekulare Verbindung oder die Mischung aus solchen mindestens in den flüssigen Zustand zu überführen, eine unter Druck stehende Lösung in der niedermolekularen Verbindung ausbilden.

Unter Basisharz ist die filmbildende höhermolekulare Komponente eines duroplastischen Pulverlackes zu verstehen, die im allgemeinen mindestens 50 Gew.-% der zugrundeliegenden Basisharz/Härter-Kombination ausmacht, während die Härterkomponente im allgemeinen maximal 50 Gew.-% innerhalb dieser Kombination beträgt. Die Bindemittelbasis der Basisharze unterliegt keinen prinzipiellen Beschränkungen. Geeignet sind beispielsweise übliche für Pulverlacke eingesetzte Basisharze. Beispiele sind: Polyesterharze, (Meth)acrylcopolymere, Epoxidharze, Phenolharze, Polyurethanharze, Siloxanharze. Die Basisharze weisen beispielsweise Glasübergangstemperaturen von 30 bis 120°C, bevorzugt unter 80°C, auf und besitzen beispielsweise zahlenmittlere Molmassen (Mn) von 500 - 20000, bevorzugt unter 10000. Die Härter besitzen z.B. zahlenmittlere Molmassen (Mn) von 84 - 3000, bevorzugt unter 2000. Es können verschiedene Basisharze und Härter miteinander gemischt werden.

Basisharze und Härter tragen untereinander komplementäre funktionelle Gruppen, die eine Vernetzungsreaktion bei den Einbrennbedingungen des Pulverlackes erlauben. Beispiele für funktionelle Gruppen sind Carboxylgruppen, Epoxidgruppen, aliphatisch oder aromatisch gebundene OH-Gruppen, Silanolgruppen, Isocyanatgruppen, blockierte Isocyanatgruppen, Anhydridgruppen, primäre oder sekundäre Aminogruppen, geblockte Aminogruppen, zur ringöffnenden Addition befähigte N-heterocyclische Gruppen, wie z.B. Oxazolingruppen, (Meth)acryloylgruppen, CH-acide Gruppen wie z.B. Acetoacetatgruppen.

Die Auswahl der miteinander reagierenden Gruppen ist dem Fachmann geläufig. Es können gegebenenfalls verschiedene reaktive Gruppen miteinander kombiniert werden. Das kann über Bindemittel geschehen, die verschiedene reaktive funktionelle Gruppen tragen, oder es werden Gemische von unterschiedlichen Härtern und/oder Basisharzen eingesetzt.

Die verschiedenen funktionellen Gruppen können zugleich am Basisharz und/oder Härter vorhanden sein. Die Basisharze sowie auch Härter enthalten im Mittel mindestens 2 funktionelle Gruppen pro Molekül. Das Verhältnis von Basisharz zu Härter beträgt im allgemeinen beispielsweise 98 : 2 bis 50 : 50. Bevorzugt liegt es zwischen 95 : 5 und 70 : 30. Es können auch mehrere Basisharze bzw. mehrere Härter im Gemisch vorliegen

Bei den nach dem erfindungsgemäßen Verfahren hergestellten Pulverlacken handelt es sich bevorzugt um Pulverklarlacke. Falls erforderlich, können übliche Pulverlackadditive zugemischt werden. Beispiele für solche Additive sind Verlaufsmittel, Entgasungsmittel wie z.B. Benzoin, Antioxidantien, Lichtschutzmittel, Mattierungsmittel, farb- und/oder effektgebende anorganische und/oder organische Pigmente und/oder Füllstoffe, Farbstoffe, Haftvermittler, Gleitmittel, Katalysatoren sowie rheologiesteuernde Mittel. Die Additive können einzeln oder auch als Mischung zugesetzt werden. Bevorzugt werden sie aus Handhabbarkeitsgründen in Form von Masterbatches zugesetzt. Bevorzugt werden solche Additive zugesetzt, die in der inerten Verbindung löslich sind.

Flüssige Additive können den Bindemitteln vor Zugabe der inerten Verbindung zugesetzt werden. Eine andere Arbeitsweise setzt die Additive als separaten Masterbatch vor der Zugabe der inerten Verbindung zu.

Die nach dem erfindungsgemäßen Verfahren durch spontane oder zeitabhängige Entspannung hergestellten und gegebenenfalls direkt auf das Beschichtungsobjekt applizierten Pulverlacke zeichnen sich aus durch Teilchengrößen über 5 µm und monomodale Teilchengrößenverteilungen.

Über Additive kann der Anwendungsbereich der nach dem erfindungsgemäßen Verfahren hergestellten und verarbeiteten Pulverlacke beeinflußt werden. Werden Korrosionsschutzpigmente eingesetzt, ist eine Verwendung als Korrosionsschutzüberzugsmittel möglich. Für einen Einsatz beispielsweise als Füller oder als Steinschlagschutzschicht kann der Gehalt an Pigmenten/Füllstoffen beispielsweise auf bis zu 30 Gew.-%, bezogen auf den fertigen Pulverlack, erhöht werden. Die Schichtdicke von aus solchen Pulverlacken hergestellten Füller- bzw. Steinschlagschutzschichten beträgt im eingebrannten Zustand beispielsweise zwischen 40 und 300 µm.

Werden deckende Pigmente, gegebenenfalls auch Effektpigmente, eingesetzt, so handelt es sich um als Basis- oder Decklacke einsetzbare Pulverüberzugsmittel. Das erfindungsgemäße Verfahren bietet insbesondere bei Verwendung deckender, in der verflüssigten Verbindung oder im überkritischen Lösemittel löslicher Pigmente den Vorteil, daß diese nach Entspannung der unter Druck stehenden Lösung im fertigen Pulverlack in homogener und feinstverteilter Form vorliegen. Werden keine oder farblose Pigmente, z.B. mikronisiertes Titandioxid oder Siliciumdioxid, eingesetzt, so handelt es sich um die nach dem erfindungsgemäßen Verfahren bevorzugt herstellbaren und verarbeitbaren Pulverklarlacküberzugsmittel.

Bei der Verwendung als Deck- oder Klarlacküberzugsmittel können diese beispielsweise auf in der Automobilindustrie übliche Substrate appliziert werden, z.B. mit Füller- oder Basislacküberzügen versehene Substrate. Diese können gegebenenfalls vorher eingebrannt werden oder es ist eine Beschichtung nach dem Trocken-in-Naß-Verfahren möglich. Dabei können für diese Schichten übliche konventionelle Lacksysteme eingesetzt werden, bevorzugt ist jedoch die Verwendung von umweltfreundlichen hochfestkörperreichen oder wäßrigen Systemen. Mit den erfindungsgemäß hergestellten Pulverlacken erzeugte Deck- oder Klarlackschichten weisen im eingebrannten Zustand Schichtdicken im allgemeinen beispielsweise zwischen 30 und 150 µm, bevorzugt zwischen 40 und 80 µm auf.

Nach dem Beschichten werden die Überzüge durch Erhitzen, beispielsweise auf 80 bis 240°C, bevorzugt 100 bis 220°C, zum Schmelzen, Verfließen und chemischen Vernetzen gebracht.

Der beim Arbeiten mit nach dem erfindungsgemäßen Verfahren hergestellten Pulverlacken gebildete Overspray kann aus der Kabinenluft nach üblichen Methoden abgetrennt und als hochwertiges Pulverlackmaterial recyclisiert werden. Er kann, wie auch der erfindungsgemäß hergestellte Pulverlack, durch übliche Pulverlackapplikationstechniken, z.B. Spritzapplikation sowie auch durch Sinterverfahren auf das Substrat gebracht werden. Beispiele dafür sind: Tribospritzen, gegebenenfalls ESTA-unterstütztes Spritzen, gegebenenfalls ESTA-unterstütztes Wirbelsintern, Fluidized-Bed-Techniken, Bandbeschichtungsverfahren.

Alternativ kann der Pulverlackoverspray auch in geeigneten organischen Lösemitteln gelöst, gegebenenfalls filtriert und anschließend als lösemittelbasierendes Lacksystem eingesetzt werden. Dieses weist eine hervorragende Eignung zur Reparaturlackierung entsprechender Pulverlackschichten auf, da die Festkörperzusammensetzung von Pulverlack und lösemittelbasierendem Lack identisch ist, d.h. beispielsweise Eigenfarbe und Brechungsindex von Erst- und Reparaturlackierung weichen nicht voneinander ab.

Das erfindungsgemäße Verfahren erlaubt es, Pulverlacke oder wäßrige Suspensionen solcher Pulverlacke in einfacher Weise herzustellen. Extrusion und ein Aufschmelzen von Basisharz- und Härterkomponenten werden vermieden, d.h. es kommt zu einer nur sehr geringen Temperaturbelastung beim Zusammenführen von Basisharz- und Härterkomponenten.

Das erfindungsgemäße Verfahren gestattet es, Ober- und Unterkorn sowie Overspray gleichartig zusammengesetzter Pulverlacke in einfacher Weise zu recyclisieren. Insbesondere gelingt es ohne Veränderung in der chemischen Zusammensetzung einen Pulverlack zurückzugewinnen, der eine zu Beschichtungszwecken geeignete Teilchengrößenverteilung aufweist. Die nach dem erfindungsgemäßen Verfahren durch spontane oder bevorzugt zeitabhängige Entspannung recyclisierten und gegebenenfalls direkt auf das Beschichtungsobjekt applizierten Pulverlacke zeichnen sich aus durch Teilchengrößen über 5 µm und monomodale Teilchengrößenverteilungen.

Das erfindungsgemäße Verfahren vermeidet eine unerwünschte thermische Belastung des zu recyclisierenden Pulverlackmaterials und erlaubt eine schonende Entfernung mechanischer Verunreinigungen durch Filtration.

Die nach dem erfindungsgemäßen Recyclingverfahren gewonnenen Pulverlacke weisen gute applikationstechnische Eigenschaften auf und können zu Beschichtungszwecken wieder eingesetzt werden. Dabei entspricht das Beschichtungsergebnis dem eines mit frischem Pulverlack gleicher Zusammensetzung erhaltenen.

Das erfindungsgemäße Verfahren erlaubt es, die unerwünschte Ausbildung von Feinkornanteilen zu vermeiden. Mahlungs- und Siebungsschritte sind nicht notwendig.

### Beispiel:

In einen 10 l-Hochdruckautoklaven werden 300g eines Dicarbonsäurepolyanhydrids (Additol VXL 1381, Handelsprodukt der Firma HOECHST) und 700g eines festen Glycidylmetharcrylatcopolymeren mit einem Epoxidäquivalentgewicht von 370 und einem zahlenmittleren Molekulargewicht von 2100 separat eingewogen. Nach Verschließen des Autoklaven wird durch eine Hockdruckkapillare Kohlendioxid eingeleitet und im Autoklaven mittels eines Kompressors ein Druck von 33,5 MPa eingestellt. Gleichzeitig wird über eine Thermostatisierungseinrichtung eine Temperatur der Mischung von 34°C eingestellt. Nach 40minütigem Betrieb wird die entstandene Lösung auf Atmosphärendruck entspannt. Nach Öffnen des Autoklavendeckels konnte ein einheitlicher Feststoff mit schaumartiger Struktur entnommen werden.

Anschließend wurde dieses Material unter geringem Kraftaufwand mechanisch zerkleinert. Die mittlere Teilchengröße lag bei 30 µm.

## Patentansprüche

1. Verfahren zur Herstellung von Basisharz- und Härterkomponenten enthaltenden oder thermoplastische Harze enthaltenden Pulverlackzusammensetzungen, dadurch gekennzeichnet, daß man ein oder mehrere Basisharze und einen oder mehrere Härter oder ein oder mehrere thermoplastische Harze, die jeweils in fester Form vorliegen, gemeinsam in mindestens einer unter Normalbedingungen für Druck und Temperatur gasförmig vorliegenden, niedermolekularen, gegenüber den Basisharzen und Härtern oder thermoplastischen Harzen inerten Verbindung bei einem Druck und einer Temperatur, die geeignet sind, die niedermolekulare Verbindung mindestens in den flüssigen Zustand zu überführen, auflöst und anschließend die erhaltene Lösung entspannt.

2. Verfahren nach Anspruch 1, dadurch gekennzeichnet, daß das oder die Basisharze und der oder die Härter oder das oder die thermoplastischen Harze mindestens teilweise in Form von zu recyclisierendem Pulverlackmaterial eingesetzt werden.

3. Verfahren nach Anspruch 1 oder 2, dadurch gekennzeichnet, daß man als unter Normalbedingungen gasförmige, niedermolekulare Verbindung ein bei Temperaturen von 20 - 150°C und Drücken von 3-60 MPa überkritisches Fluid einsetzt.

4. Verfahren nach einem der vorhergehenden Ansprüche, dadurch gekennzeichnet, daß man als niedermolekulare Verbindung Kohlendioxid, Distickstoffoxid, Chlortrifluormethan, Monofluormethan, Ethan, Propan oder Butan verwendet.

5. Verfahren nach einem der vorhergehenden Ansprüche, dadurch gekennzeichnet, daß Basisharze und Härter zusammen mit einem oder mehreren für Pulverlacke üblichen Additiven vorgelegt und mit der niedermolekularen inerten Verbindung versetzt werden.

6. Verfahren nach einem der Ansprüche 1 bis 5, dadurch gekennzeichnet, daß die Lösung innerhalb eines Druckbehälters entspannt wird.

7. Verfahren nach einem der Ansprüche 1 bis 5, dadurch gekennzeichnet, daß die Lösung durch Versprühen in eine Umgebung, die einen unterhalb des Verfahrensdruckes liegenden Druck aufweist, spontan entspannt wird.

8. Verfahren nach Anspruch 7, dadurch gekennzeichnet, daß das Versprühen in Form eines Sprühauftrags in Richtung auf ein mit der Pulverlackzusammensetzung zu beschichtendes Substrat durchgeführt wird.

9. Verfahren nach Anspruch 8, dadurch gekennzeichnet, daß mit einem oder mehreren beweglichen Sprühaggregaten versprüht wird, die in ihrem Bewegungsablauf der Geometrie des zu beschichtenden Substrats angepaßt sind.

10. Verwendung der nach dem Verfahren eines der vorhergehenden Ansprüche hergestellten Pulverlackzusammensetzungen zur Herstellung von Lackierungen, insbesondere auf dem Kraftfahrzeugsektor.

11. Verwendung der nach dem Verfahren eines der vorhergehenden Ansprüche 1 bis 9 hergestellten Pulverlackzusammensetzungen zur Herstellung von Klarlackschichten, insbesondere auf dem Kraftfahrzeugsektor.

## Claims

1. Process for the production of powder coating compositions containing base resin and curing agent components or thermoplastic resins, characterised in that one or more base resins and one or more curing agents or one or more thermoplastic resins, each in solid form, are dissolved together in at least one low molecular weight compound which is in gaseous form under standard temperature and pressure conditions and is inert towards the base resins and curing agents or thermoplastic resins, at a pressure and a temperature which are suitable for converting the low molecular weight compound at least into the liquid state, and the resultant solution is then depressurised.

2. Process according to claim 1, characterised in that the base resins and the curing agent or agents or the thermoplastic resin or resins are at least in part used in the form of powder coating material to be recycled.

3. Process according to claim 1 or 2, characterised in that a fluid which is supercritical at temperatures of 20-150°C and pressures of 3-60 MPa is used as the low molecular weight compound which is gaseous under standard conditions.

4. Process according to one of the preceding claims, characterised in that carbon dioxide, nitrogen monoxide, chlorotrifluoromethane, monofluoromethane, ethane, propane or butane are used as the low molecular weight compound.

5. Process according to one of the preceding claims, characterised in that the base resin and curing agent are initially introduced together with one or more additives conventional in powder coatings and combined with the low molecular weight inert compound.

6. Process according to one of claims 1 to 5,
characterised in that the solution is depressurised within a pressure vessel.

7. Process according to one of claims 1 to 5,
characterised in that the solution is spontaneously depressurised by being sprayed into an environment which is at a pressure below the pressure of the process.

8. Process according to claim 7, characterised in that the spraying is performed as spray application directed towards a substrate to be coated with the powder coating composition.

9. Process according to claim 8, characterised in that spraying is performed with one or more mobile spray units, the sequence of movements of which is adapted to the geometry of the substrate to be coated.

10. Use of the powder coating compositions produced using the process of one of the preceding claims for the production of lacquer coatings, in particular in the automotive sector.

11. Use of the powder coating compositions produced using the process of one of the preceding claims 1 to 9 for the production of clear lacquer coatings, in particular in the automotive sector.

## Revendications

1. Procédé de préparation de compositions de peintures pulvérulentes contenant des composants de résine de base et de durcisseur ou contenant des résines thermoplastiques, caractérisé en ce qu'on met en solution une ou plusieurs résines de base et un ou plusieurs durcisseurs ou une ou plusieurs résines thermoplastiques, qui se présentent respectivement sous forme solide, ensemble dans au moins un composé gazeux dans des conditions normales de température et de pression, de bas poids moléculaire, inerte vis à vis des résines de base et des durcisseurs ou des résines thermoplastiques, a une pression et une température qui sont appropriées pour transformer le composé de bas poids moléculaire au moins à l'état liquide, et en ce qu'on détend ensuite la solution obtenue.

2. Procédé selon la revendication 1, caractérisé en ce que la ou les résines de base et le ou les durcisseurs ou la ou les résines thermodurcissables sont utilisés au moins partiellement sous la forme de matériau de peinture pulvérulente à recycler.

3. Procédé selon la revendication 1 ou 2, caractérisé en ce qu'on utilise comme composé de bas poids moléculaire, gazeux dans des conditions normales, un fluide surcritique à des températures de 20 - 150°C et des pressions de 3 - 60 MPa.

4. Procédé selon l'une des revendications précédentes, caractérisé en ce qu'on utilise comme composé de bas poids moléculaire le dioxyde de carbone, l'oxyde de diazote, le chlorotrifluorométhane, le monofluorométhane, l'éthane, le propane ou le butane.

5. Procédé selon l'une des revendications précédentes, caractérisé en ce qu'on utilise les résines de bases et les durcisseurs ensemble avec un ou plusieurs additifs usuels pour les peintures pulvérulentes et en ce qu'on les mélange avec le composé inerte de bas poids moléculaire.

6. Procédé selon une des revendications 1 à 5, caractérisé en ce que la solution est détendue à l'intérieur d'un récipient sous pression.

7. Procédé selon une des revendications 1 à 5, caractérisé en ce que la solution est détendue de manière spontanée par atomisation dans un environnement qui présente une pression située au-dessous de la pression du procédé.

8. Procédé selon la revendication 7, caractérisé en ce qu'on réalise l'atomisation sous la forme d'un dépôt par pulvérisation en direction d'un substrat à recouvrir avec la composition de peinture pulvérulente.

9. Procédé selon la revendication 8, caractérisé en ce qu'on atomise avec un ou plusieurs groupes mobiles de pulvérisation, dont la séquence de mouvement est adaptée à la géométrie du substrat à recouvrir.

10. Utilisation des compositions de peintures pulvérulentes préparées avec le procédé selon une des revendications précédentes pour la préparation de peintures, en particulier dans le secteur des véhicules à moteur.

11. Utilisation des compositions de peintures pulvérulentes préparées avec le procédé selon une des revendications précédentes 1 à 9 pour la préparation de couches de vernis incolore, en particulier dans le secteur des véhicules à moteur.
